Europäisches Patentamt

European Patent Office

Office européen des brevets

(19)

(11) Veröffentlichungsnummer: **0 187 188**
**A2**

(12) **EUROPÄISCHE PATENTANMELDUNG**

(21) Anmeldenummer: **85106874.2**

(22) Anmeldetag: **15.06.85**

(51) Int. Cl.⁴: **F 16 F 13/00**
**B 60 K 5/12**

(30) Priorität: **08.12.84 DE 3444899**

(43) Veröffentlichungstag der Anmeldung:
**16.07.86 Patentblatt 86/29**

(84) Benannte Vertragsstaaten:
**DE FR GB IT**

(71) Anmelder: **AUDI AG**
**Postfach 220**
**D-8070 Ingolstadt(DE)**

(72) Erfinder: **Amborn, Peter, Dipl.-Ing.**
**Rackersthofener Strasse 8**
**D-8071 Wettstetten(DE)**

(74) Vertreter: **Le Vrang, Klaus**
**AUDI AG Postfach 220 Patentabteilung**
**D-8070 Ingolstadt(DE)**

(54) Zugbegrenzer.

(57) Es wird ein Zugbegrenzer für ein Zweikammer-Motorlager vorgeschlagen, der aus einer band- oder bahnartigen Verbindung zwischen Lagerkern und Widerlager besteht. Wird das Lager auf Zug beansprucht, spannt sich diese Verbindung, und ein weiteres Auseinanderbewegen von Lagerkern und Widerlager ist verhindert. Auf diese Weise wird einem Auseinanderreißen des Lagers entgegengewirkt.

AUDI AG

Ingolstadt, den 30. Mai 1985
IP 2014 Eur.    Vg/Lie

0187188

## Zugbegrenzer

Die Erfindung betrifft ein fluidisches, beispielsweise ein pneumatisches, insbesondere jedoch ein hydraulisches Motorlager gemäß dem Oberbegriff des Anspruchs 1.

Ein derartiges Lager ist beispielsweise in der europäischen Patentschrift 85102674.0 beschrieben.

Bei bekannten Lagern dieser Art werden die Zugbegrenzer in der Regel ausgebildet als in die elastische Verbindung zwischen Lagerkern und Widerlager integrierter Metallring, der in anschlagmäßige Berührung kommt mit einem mit dem Lagerkern verbundenen Metallring, sobald das Lager auf Zug beansprucht wird.

Abgesehen davon, daß die Festigkeitseigenschaften derartiger, auf Zug beanspruchter Lager nicht stets zufriedenstellend sind, handelt es sich hierbei um eine verhältnismäßig aufwendige und dementsprechend kostenintensive Lösung.

Aufgabe der Erfindung ist es, für ein gattungsgemäßes Lager einen Zugbegrenzer zu schaffen, der bei hoher Zuverlässigkeit preiswert ausgebildet werden kann.

Erfindungsgemäß ist vorgesehen, daß der Lagerkern und das Gegenlager eines hydraulischen Motorlagers durch eine formweiche Materialbahn ausgebildet sind, die einerseits am Widerlagergehäuse entlang zumindest eines Teils des Umfangs befestigt ist und andererseits am Lagerkern befestigt ist. Die Materialbahn ist nicht formsteif, andererseits jedoch nur begrenzt elastisch, so daß sie bei Zugbeanspruchung nur wenig nachgibt. Ein geeignetes Material ist beispielsweise ein Band aus Baumwoll- oder Kunststoffgewebe. Auch Stahlbänder oder verwebte Stahlbänder sind als Material denkbar.

Die Anforderung an die Verbindung ist, daß sie ein elastisch progressiv Verhalten haben muß, wobei im gespannten Zustand eine weitere Krafterhöhung keine große zusätzliche Dehnung mit sich bringen darf. Weiterhin darf sie keinen Schall übertragen, und außerdem muß sie den üblichen Anforderungen, wie sie im Motorraum eines Kraftfahrzeuges gestellt werden, gewachsen sein, insbesondere darf sie durch die dort auftretenden Chemikalien nicht zersetzt werden, und sie muß die auftretenden Wärmebelastungen verkraften.

Bevorzugterweise wird eine Metallplatte vorgesehen, an deren Rand Gewebebänder befestigt sind. Die Metallplatte wird mit dem Lagerkern verbunden, beispielsweise verschraubt, und die Gewebebänder werden am Gehäuse des Widerlagers beispielsweise mit einem Spannring verklemmt.

Die Materialbahnen können, wie erwähnt, aus Gummigewebeverbänden, aus Kunststoffgeweben oder auch aus Stahl-Kunststoff-Verbänden bestehen.

In einer bevorzugten Ausführungsform handelt es sich nicht nur um Gewebebänder, sondern um eine Bahn, die den größten Teil der elastischen Verbindung zwischen Lagerkern und Widerlager, eventuell sogar die gesamte Verbindung, überdeckt, so daß die in der Regel aus Gummi bestehende Verbindung zwischen Lagerkern und Widerlager gegenüber Hitzeeinwirkungen abgeschirmt wird.

Aus der DE-AS 1 095 063 ist bekannt, Gummi-Metall-Federn mit Hilfe von schlauchartig umgebenden Gewebebahnen an einer Ausdehnung durch Zug zu hindern. Die dort bekannten Umhüllungen sind jedoch anwendbar, bei denen Kern und Widerlager zu Befestigungszwecken frei zugänglich sein müssen.

Im folgenden wird die Erfindung anhand der Zeichnung dargestellt. Es zeigt:

Fig. 1     einen Schnitt durch ein Zweikammer-Motorlager unter Verwirklichung der Erfindung;

Fig. 2     die perspektivische Ansicht eines Motorlagers unter Verwirklichung der Erfindung; und

Fig. 3     die Aussicht auf einen Teil des erfindungsgemäßen Zugbegrenzers.

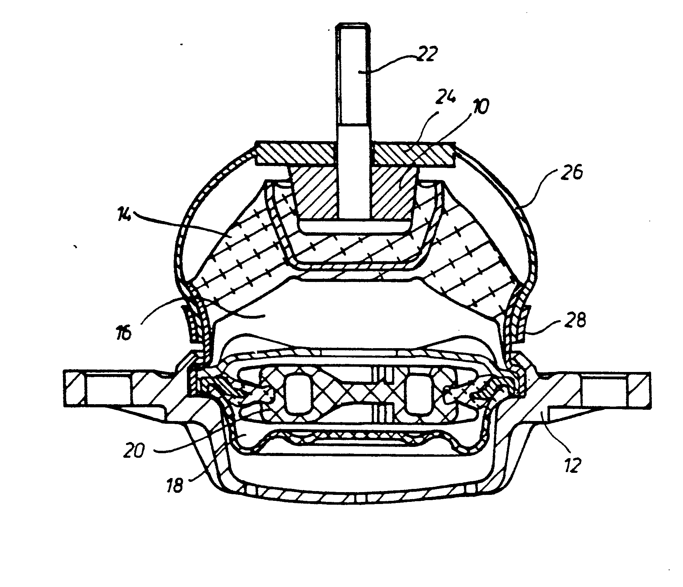

In Fig. 1 ist mit 10 ein Lagerkern bezeichnet, der über einen Gummi 14 mit einem Widerlager 12 verbunden ist. Wie unschwer zu erkennen ist, ist der Lagerkern 10 in das Gummi 14 eingebettet. Zwischen Lagerkern 10 und Widerlager 12 ist ein Flüssigkeitsvolumen eingeschlossen, das durch Bewegungen des Lagerkerns 10 relativ zum Widerlager 12 in seinem Volumen beeinflußt wird. Dieses Flüssigkeitsvolumen ist auf zwei Kammern 16 und 18 aufgeteilt, die durch eine begrenzt bewegliche Wand 20 voneinander getrennt sind. Flüssigkeit kann von der Kammer 16 in die Kammer 18 und umgekehrt strömen. Derartige Lager gehören heute zum Stand der Technik.

Erfindungsgemäß ist vorgesehen, daß der Lagerkern 10 bzw. der krafteinleitende Bolzen 22 über ein Band 26 oder eine entsprechende Materialbahn 26 mit dem Widerlager 12 verbunden ist. Die Befestigung am Lagerkern 10 bzw. an dem Bolzen 22 geschieht über einen Anschlußring 24, der den Bolzen 22 umgibt und entweder das Band 26 festklemmt, oder das Band 26 bereits integriert in sich aufnimmt.

Am anderen Ende ist das Band 26 mit einer Schelle 28 festgeklemmt.

- 4 -

0187188

Das Band 26 kann im einfachsten Falle aus mehreren Schnüren bestehen, die sich spannen, wenn sich der Lagerkern 10 zu weit vom Widerlager 12 entfernt. Damit ist ein weiteres Auseinanderbewegen
des Lagerkernes 10 und des Widerlagers 12 verhindert.

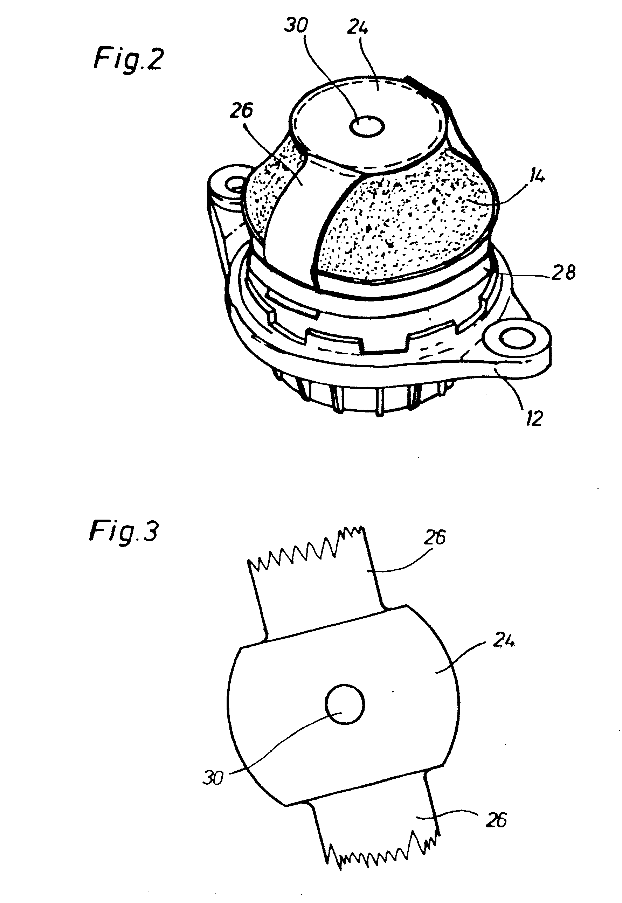

Fig. 2 zeigt eine Aufsicht, wobei wiederum das Gehäuse des Widerlagers 12 sowie das Gummi 14, das Widerlagergehäuse 12 mit dem
nicht dargestellten Lagerkern 10 verbindet, zu erkennen ist.

Der Lagerkern 10 wird durch eine Abdeckplatte 14 überdeckt, die
am Lagerkern 10 aufliegt und seitlich zwei Befestigungsvorrichtungen für die Materialbahnen 26 aufweist. Die Materialbahnen 26
verlaufen von der Platte 24 am Motorlager entlang und werden am
Umfang des Gehäuses des Widerlagers 12 mittels einer Klemmschelle 28 festgeklemmt.

Fig. 3 zeigt die Aufsicht auf die Platte 24, die in der Mitte eine Öffnung 30 besitzt, durch die der Bolzen 22 in den Lagerkern
10 einschraubbar ist. Beispielsweise mit Hilfe einer am Gewindebolzen 22 vorgesehenen Mutter ist die Platte 24 am Lagerkern 10
festklemmbar, so daß eine Bewegung des Lagerkernes 10 gleichzeitig zu einer Bewegung der Platte 24 führt. Entfernt sich die Platte 24 und somit der Lagerkern 10 von dem Widerlager 12 weg, so
daß das Gummi 14 auf Zug beansprucht wird, straffen sich die Gewebebahnen 26, die einerseits an der Platte 24 befestigt sind und
andererseits von der Klemmschelle 28 gehalten werden, so daß eine
weitere Relativbewegung des Lagerkerns 10 weg vom Widerlager 12
verhindert wird.

Das Band 26 kann im einfachsten Falle aus mehreren Schnüren bestehen, die sich spannen, wenn sich der Lagerkern 10 zu weit vom
Widerlager 12 entfernt. Damit ist ein weiteres Auseinanderbewegen
des Lagerkerns 10 und der Widerlagers 12 verhindert.

Bevorzugterweise werden jedoch keine Schnüre eingesetzt, sondern bandartige oder gar bahnartige Gewebeverbände, die zum einen die Belastung besser verteilen, und zum anderen, da sie das Gummi 14 des Lagers umgeben, gleichzeitig eine Schutzfunktion ausüben. Die Länge des Bandes 26 ist auf den maximalen Zugausschlag des Lagers abgestimmt.

P a t e n t a n s p r ü c h e

1. Fluidisches, insbesondere hydraulisches Motorlager mit einem Lagerkern (10), einem Widerlager (12), mindestens einer von Lagerkern und Widerlager eingeschlossenen Kammer (16, 18), und einem Zugbegrenzer (26), d a d u r c h g e k e n n z e i c h - n e t , daß der Zugbegrenzer als formweiche Materialbahn (26) ausgebildet ist, die einerseits am Widerlagergehäuse (12) entlang zumindest eines Teils des Umfangs befestigt ist und die andererseits am Lagerkern (10) befestigt ist.

2. Motorlager nach Anspruch 1, d a d u r c h g e k e n n - z e i c h n e t , daß der Zugbegrenzer (26) eine Metallplatte (24) aufweist, die mit dem Lagerkern (10) verbindbar ist und an der die Materialbahn befestigt ist.

3. Motorlager nach Anspruch 2, d a d u r c h g e k e n n - z e i c h n e t , daß die Metallplatte (24) eine mittige Öffnung (30) aufweist, durch die ein in den Lagerkern (10) einschraubbarer Gewindebolzen (22) hindurchführbar ist.

4. Motorlager nach einem der vorhergehenden Ansprüche, d a - d u r c h g e k e n n z e i c h n e t , daß die Material- bahn (26) am Widerlagergehäuse (12) mittels einer Klemmschelle (28) befestigt ist.

5. Motorlager nach einem der vorhergehenden Ansprüche, d a - d u r c h g e k e n n z e i c h n e t , daß die Material- bahn aus Gummigewebeverbund und/oder Kunststoffgewebe besteht.

6. Motorlager nach Anspruch 5, d a d u r c h g e k e n n - z e i c h n e t , daß die Gewebebahn mit einem Schutzüberzug versehen ist.

7. Motorlager nach einem der vorhergehenden Ansprüche,  d a -
   d u r c h   g e k e n n z e i c h n e t ,   daß die Materialbahn (26) eine zwische Lagerkern (10) und Widerlager (12) vorgesehene elastische Verbindung (14) schirmartig abdeckt.

0187188

0187188

Fig.2

Fig.3